# EUROPEAN PATENT APPLICATION

(11) **EP 1 432 268 A1**
(43) Date of publication of application: **23.06.2004**
(21) Application number: 03104597.4
(22) Date of filing: 09.12.2003
(51) Int. Cl.: H04Q 7/38

(54) **Data transmission service**

(30) Priority: 18.12.2002 FI 20022228
(71) Applicant: Radiolinja Origo Oy, 02240 Espoo (FI)
(72) Inventor: Rekola, Mika, 33349, Tampere (FI)
(74) Representative: Savela, Antti-Jussi

(57) **Abstract**

The invention relates to transmitting automatically data transmission service depending on location of a terminal (200, 206, 207). A subscriber specifies in a predetermined service profile the desired content of the service, the desired service time, and the desired location of the service. One terminal, or alternatively, one group, is related to at least one service profile. Each profile includes definitions according to which a service provider opens at a fixed point of time and at a fixed location a data transmission connection between a terminal of the subscriber and, for example, a certain Web page.

## Description

### Field of the invention

The present invention relates generally to the data transmission services provided in a data network, wherein said services are dependent on the location of a mobile terminal.

### Background of the invention

The use of the Internet has become a commonplace, especially at work and school. Internet connections are increasingly in use at homes. Email is perhaps the most important of the services provided, but also bank services, purchase and sale services, and news services related to a number of topics are popular. The supply of services is versatile. For example, it is possible to search information about social topics, information technologies, natural sciences, art, and hobbies.

Usually a user has one or more terminals in his/her personal use. For example, a subscriber may have a fixed terminal through which he/she can obtain connection to the Internet, and he/she may further have a mobile terminal, such as a GSM (Global System for Mobile communication), a GPRS (General Packet Radio System), or a UMTS (Universal Terrestrial Radio Access) terminal.

By using a GPRS terminal of the packet-switched data network or a UMTS terminal of the digital mobile communication network of the third generation, it is possible, for example, to connect to X.25 packet networks or the Internet networks in accordance with IP protocol (Internet Protocol).

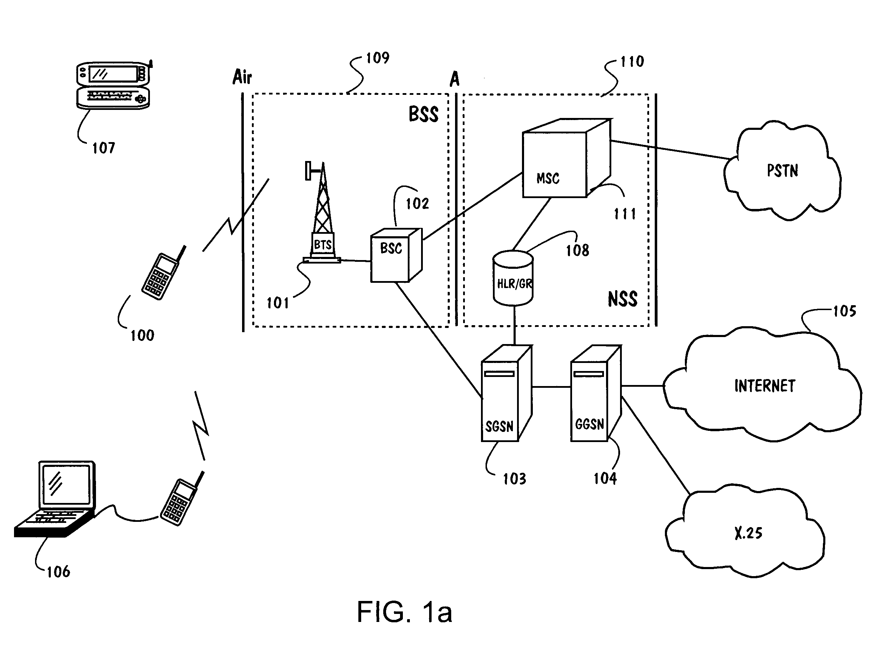

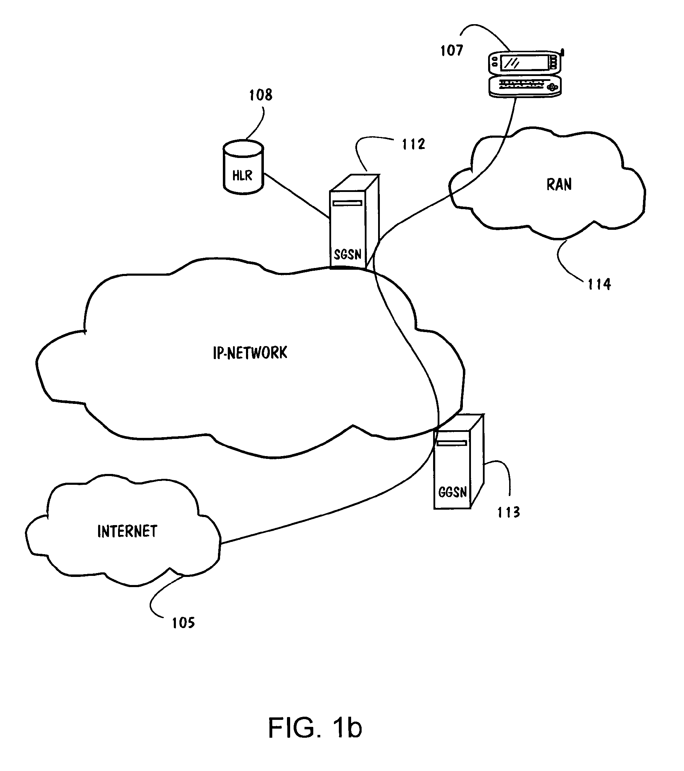

FIG. 1 illustrates the architecture of a GSM/GPRS system by means of a simplified block diagram.

A GPRS system is an extension of the GSM network which supports packet-switched data transmission in the infrastructure of the GSM network. It provides techniques enabling GSM operators to divide physical resources among the packet-switched services and the circuit-switched services. In addition to the ordinary GSM channels, the GPRS service is defined as containing specific packet channels (PDCH, Packet Data Channels) which are allocated only when needed. GPRS as such does not require channels of its own, but it can compete with the telephone traffic for the same channels.

NSS (Network Subsystem) 110 comprises an MSC (Mobile Services Switching Center) 111 and a number of registers, such as an HLR (Home Location Register) 108. BSS (Base Station Subsystem) 109 is located between the interface "A" and the air interface comprising BSCs (Base Station Controllers) 102 which controls BTSs (Base Transceiver Stations) 101. Base stations are connected to the terminals 100, 106, 107 via the air interface.

The GPRS network is based on two logical units: an operation node termed SGSN (Serving GPRS Support Node) 103 and a gateway node termed GGSN (Gateway GPRS Support Node) 104. GPRS also comprises other units, such as IP (Internet Protocol) routers, firewalls and servers (not shown in the figure).

The operation node SGSN is located on the same hierarchical level as the MSC (Mobile Switching Center). It maintains information about the location of a GPRS terminal in the service area of the said terminal and performs functions related to security and access control. The operation node SGSN requests identification and subscriber information from the HLR 108 of the subscriber.

The gateway node GGSN operates as a gateway to external networks. It operates in a similar way as a router, i.e. it routes packets to a certain operation node from the operation node SGSN which currently serves a GPRS terminal. The GPRS terminal and the gateway node GGSN cannot communicate with each other if they don't use the operation node SGSN having the context information related to this terminal. The serving operator possesses location information with the accuracy of at least the cell level of the GPRS terminals situated in its network.

In accordance with the present routine, each subscriber of a GPRS terminal must activate the PDP context (Packet Data Protocol context), i.e. to connect to the Internet by himself/herself. The subscriber has to define through his/her terminal a GPRS-modem connection, for example, to the Internet or to the intranet of a company.

In the GPRS network a subscriber has a connection to a network through his/her terminal 100 so that the traffic is transmitted as packets from a base station 101 to a base station controller 102. The packet traffic is routed from the base station controller to an operation node SGSN (Serving GPRS Support Node) 103 that directs the traffic, for example, to the Internet 105 via the gateway node GGSN (Gateway GPRS Support Node) 104. The subscriber data of a subscriber is stored in the home location register of the subscriber 108 and in the VLR (Visitor Location Register) of the area where the terminal of the subscriber is currently located in (not shown in the figure).

Figure 1b illustrates the situation in which a UMTS terminal contacts the Internet.

The contact takes place in the same way as above. According to the UMTS specification, a subscriber may have one or more PDP addresses. The addresses are specified by means of the PDP context for the user's terminal 107, the operation node SGSN 112, and the gateway node GGSN 113. In Figure 1b the operation node SGSN 112 and the gateway node GGSN 113 are located in the same domain area. When there is a need to create the connection between the subscriber 107 and the Internet 105, an activation request message of the PDP context is sent via the Radio Access Network (RAN) 114 to the operation node SGSN 112. The message includes an Access Point Name (APN) related to the logical name of the gateway node GGSN. In other words, the APN relates to the gateway node GGSN 113 via which the data packets of the connection between the Internet 105 and the user terminal 107 are routed.

There are rush peaks at certain points in time during a twenty-hour periods, e.g. on workday mornings when a large number of subscribers open a connection from a terminal of a working place to the Internet, or in the afternoons when children come from school and sit down at a home terminal, or when there is noteworthy current news. Of course, a large number of subscribers decelerate the operation of the network. A slow creation phase of a network connection and slow data search and data loading are usually uncomfortable experiences for users. Correspondingly, a certain item of information must be loaded over and over again. A user visits the same Internet pages to load the same updated information, for example, the stock market pages.

The above-described problems can be reduced by a procedure which cuts the time spent establishing of a connection and performing the data search by providing for a subscriber the service according to the location of the subscriber and possibly also the point in time. The items of information defined by the user are automatically loaded into the terminal, said information changing, for example, day to day.

### Summary of the invention

The objective of the invention is to automatically provide on predetermined time a data transmission service for a mobile device according to its location.

The objective is reached by the method described in the independent patent claims.

One of the essential elements in order for the data transmission service to be implemented is a service server. The service server provides a subscriber with a new interface through which the subscriber may specify a service profile or profiles related to one or more terminals.

A service profile includes detailed items of information about the point in time when a subscriber wants to have a service, the desired site of the service, and the desired type of service.

A set of criteria determining how the data transmission procedure proceeds is defined in the service server on the basis of the service profile information. The set includes at least the following criteria: the point in time for starting the data transmission procedure, the service area of the data transmission, and the service time of the data transmission service.

The data transmission procedure starts at the defined point in time when the service server sends the first location request to the location system, the said location request relating to a certain terminal. The location requests are sent at predetermined time intervals as long as the terminal is detected as located in the service area, or until the service time of the data transmission service ends and the terminal has not been located.

When the terminal is detected as located in the service area, the service server requests, e.g. the gateway node GGSN of a GPRS network, to open a PDP context for the terminal. The service server opens a connection to the Internet and fetches an item of data determined by the service profile of the terminal, for example, a certain Web page from the Internet. When the PDP context is opened, a user has the data transmission connection to this Web page through the service server.

In one embodiment of the invention the data transmission service can be defined, for example, for a work group, a student group, or a family. Then the group may have one terminal in their use, wherein the terminal is related to one or more service profiles. The service profiles can be defined in the same way, or differently, for the members of the group.

In another embodiment of the invention the data transmission service can be implemented so that a certain service profile of the group is valid for at least one personal terminal of the group. In this implementation the location of terminals can be optimized as follows: when the terminal of the group leader arrives in the service area, the location search for the rest of the group members is started. The opening of the data transmission connection and sending the predetermined data to each terminal is performed in a predetermined way, in other words, when the terminal arrives in the service area, or immediately when the terminal is located.

### Brief description of the drawings

The invention is described more closely with reference to the accompanying drawings, in which
- Figure1a: shows by means of a simplified diagram the structure of a GPRS network,
- Figure 1 b: shows by means of a simplified diagram the structure of a UMTS network,
- Figure 2: illustrates a certain implementation of the invention,
- Figure 3: illustrates by means of a flow chart the automatically implemented data transmission service, and
- Figure 4a-b: illustrates the service profiles related to the data transmission service.

### Detailed description of the invention

In the following the invention is considered as being implemented in a GPRS network, however, this does not limit the invention, but the invention can be implemented in other kinds of networks, such as a UMTS.

In the following a user of a terminal is also termed "a client" or "a subscriber".

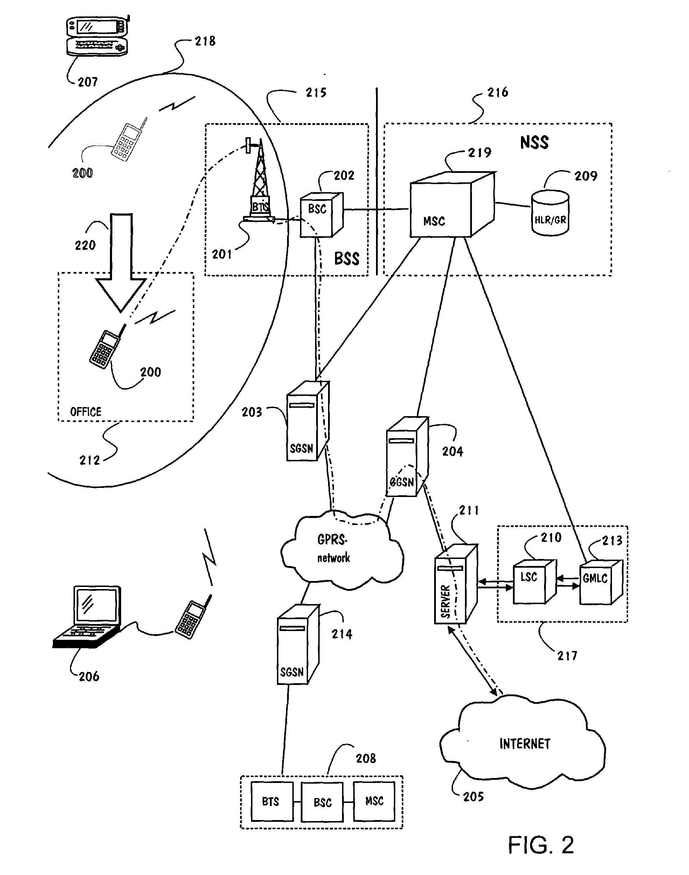

Figure 2 illustrates a certain implementation of the invention.

The data transmission service is intended for a user having a mobile GPRS terminal 200. An SGSN 203, a GGSN 204, and a location system for a mobile terminal 217 comprising a LCS (Location Services) client 210 and GMLC (Gateway Mobile Location Center) 213 are essential devices to implement the data transmission service.

One of the most important units is a service server 211 which is able to communicate with the GGSN 204 and the LCS client of the location service 210 and which is able to open a connection to the Internet and fetch from the Internet the items of information 205 defined in the service profile of the user.

Among the tasks of the service server are: maintaining the service profiles related to the serving of the subscribers of the data transmission service, sending the queries related to the location of the terminal of a user to the location system according to the time intervals that are defined in the service profile, comparing the location data of a travelling subscriber, said data being received from the location system, with the items of the location information defined in the service profile of the subscriber, asking a GGSN to open a connection to the terminal when the certain criteria determined on the basis of the service profile of a subscriber are met, fetching the items of information defined in the service profile from the Internet and sending them to the terminal defined in the service profile.

It is essential to the invention that a terminal for which the data transmission service is provided supports the connection opened from the network to the terminal, such as a Wap or an Internet connection, and that it is possible to load information from the Internet. The GGSN 204 and the HLR 209 must have an interface in order to make it possible to open a connection from the network to the terminal.

At first, when a client and a provider of the data transmission service, such as a network operator, makes a data transmission service contract, it is opened an Internet home page to which only the client and the service provider have an access. The home page is accessed by writing a user identifier and a password.

A client defines on the home page a service profile related to one of his/her mobile terminals by using a form of the service provider. The same client can define various service profiles that are mapped to one terminal and possibly other terminals usable by the client. In the following the service profiles are termed "home profiles", "work profiles" etc. in accordance with the addresses of the data transmission service defined by the user. The service profiles are discussed further on in more detail.

Let us next consider the implementation of the data transmission service using the GPRS network as an example.

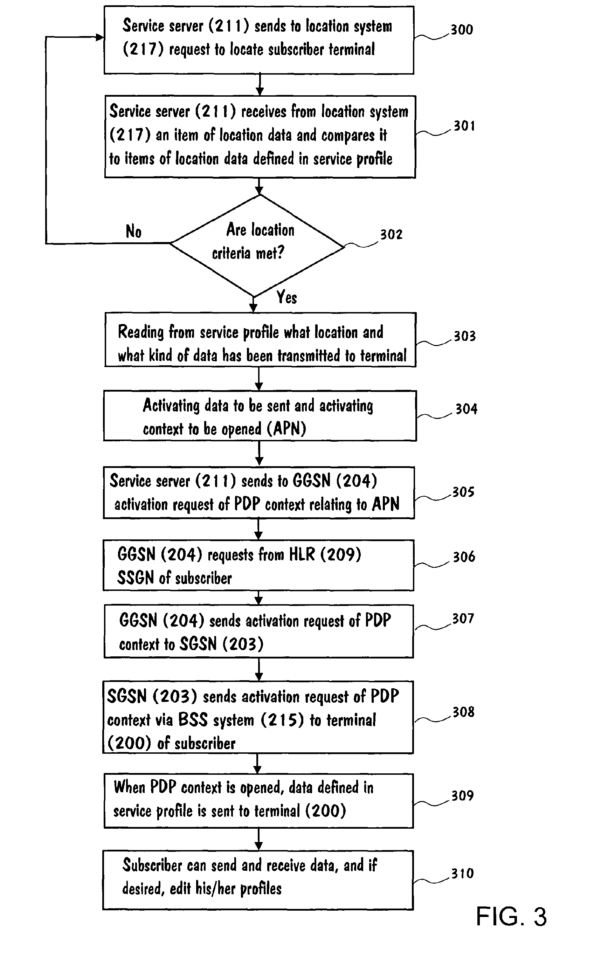

Figure 3 illustrates by means of a flow chart the automatically implemented data transmission service to the terminal of a subscriber. In order to illustrate different phases Figure 2 is referred in the flow chart.

Let us suppose that the user has a mobile GPRS terminal 200 to which it is possible to open an Internet connection.

The user has defined a work profile, i.e. he/she wants to have the data transmission service defined in the work profile ready, when he/she arrives in the morning at his/her office 212. The work profile includes information about the location of the office. In practice, the user has input the street address (e.g. Yliopistokatu 3 A 1, 000100 Helsinki) of his/her job in the definition of the work profile and a calculation unit of the service server has been changed into coordinates, unless the transformation has already been performed in the address data base maintained by the service server. The coordinates are stored with the service area information, for example, in the cell 218 whose service area includes said coordinates. Let us suppose that the user has also specified that he/she wants to have the data transmission service for his/her terminal 200 on workday mornings 6:00-10:00 o'clock.

According to the definitions of the user, criteria are set, said criteria to define among other things:
a) a point in time when the location of a certain terminal to be started,
b) a location frequency, i.e. how often the terminal is located within a certain time period,
   in addition, the location frequency is directly proportional to the distance between the terminal and the service area, i.e. when the distance is far, the localization is infrequently submitted, and when the distance is short, the localization is more frequently submitted,
c) a point in time when the location search is stopped,
d) a point in time when the service is to be closed.

The inspection means of the service server activates the location definition of a certain GPRS terminal when the criterion of a point of starting time, for example 5:45 in the morning, is met. Then the service server sends the first location request message to the LCS client 210 of the GMLC (Gateway Mobile Location Center), see the step 300 in the flow chart. The location request message includes at least the subscriber number of the terminal 200. The GMLC of the location system determines on the basis of the subscriber number the location of the subscriber using the HLR 209, thus the location system finds out through which cell and to which mobile switching center 219 the terminal 200 is connected. In response to the cell information received the, GMLC sends the information onwards to the LCS client, which maintains the database containing the LAs (Location Areas) of the operator, the cells to be served, the base stations, and their coordinates.

In step 301, in response to the service request message the service server receives the message from the LCS client, including the location data of the GPRS terminal (for example, the coordinates + subscriber number, or the cell identifier + subscriber number). The comparing means of the service server compares the location data (coordinates, cell identifier) with the location data describing the service area and stored in the database (the coordinates or the cell identifier of a certain base station of the service area). If the GPRS terminal fails to locate in the certain service area, after a predetermined time interval the service server sends a new location request message to the location system, see the step 302. The location request messages are sent at certain time intervals until the location data of the GPRS terminal fulfils the service area criteria set on the basis of the works criterion, or when the criterion of the time period is met, i.e. the defined time period for location monitoring has passed.

In step 303, if the compared items of the location data meet the predetermined criteria, i.e. if the GPRS terminal is located within a predetermined period of time in the area defined in the cell 218 (see the arrow 220 in Figure 2), the work profile is used for checking where precisely the area defined in the data transmission service is located in the service area and for checking what kind of data should be sent from the Internet to the terminal.

In step 304, the service server activates a certain item of Web data from the Internet, wherein said item is determined by the work profile, and sends, in step 305, to the GGSN a request to activate the PDP context of the subscriber 200 to the APN. In order to open the PDP context from the network the GGSN 204 starts the activation process by finding out at first the SGSN in which area the terminal of the subscriber is located. It can do this by sending a request message including the IMSI (International Mobile Subscriber Identity) of the terminal to the home location register 209 of the subscriber through the SGSN, in step 306. Alternatively, the GGSN can send a request query directly to the HLR. In both implementations the SS7 (Signaling System No 7) connection is used between the SGSN and the HLR.

When obtaining the response (including the IMSI and the address of the SGSN), the GGSN sends the PDP context with the activation request to the SGSN 203 declared by the HLR, in step 307. The next step 308 is the sending of activation response message of the PDP context (the PDP type and address) via the BSS 215 to the terminal 200 of the subscriber. The activation response message includes a request whereby the terminal is requested to activate the PDP context declared by the message and whereby the PDP context declares the activation procedure.

Meanwhile, the service server has fetched the items of information defined in the work file, i.e. the data defined by the data transmission service, which is sent to the terminal 200 through the connections opened by the GGSN, in step 309. The dashed line illustrates the data transmission connection from the Internet 205 via the units of the GPRS network to the GPRS terminal 200.

When a user of a GPRS terminal arrives at his/her office 212 which is located in a certain service area 212, the wanted items of information are already loaded in the terminal 200. Therefore, the user does not have to waste time opening a connection and fetching the information. In step 310, the user can send and receive data, and when needed, edit his/her work profile. If the user does not close the data transmission request, the service system closes it automatically at the latest when the user leaves the service area.

The client can at any time define new service profiles, delete the old service profiles, or edit their content, not only when the data transmission connection is automatically opened.

The service server is, for example, a Web server comprising a new kind of user interface. Through the interface the subscriber defines for himself/herself one or more service profiles related to a certain terminal.

The service server manages and controls the service process of the data transmission service. Among other things, it comprises software and a number of databases. The subscribers assigned to the data transmission service and their service profiles are stored in the databases. The service server also includes the calculation means for determining the geographical coordinates of street addresses. In addition, the service server includes observation means for observing whether or not the criteria are fulfilled on the basis of definitions of the service profile of a subscriber. The service process proceeds as the set criteria are fulfilled. The service server also has sending means for sending a location request message automatically at the predetermined time intervals in order to determine the location of a certain subscriber, analyzing means for analyzing the response message sent by the location system, and comparing means whereby the location data can be compared with the location data that is stored in a data base and relates to the service area. In addition, the service server includes search means for searching the information defined in the service profile, and sending means for sending the information to the terminal of the subscriber. The service server also includes communication means for communication with the location system and the GGSN.

One terminal may be mapped to one or more service profiles, or one user may have a number of terminals, each of which having one or more defined service profiles.

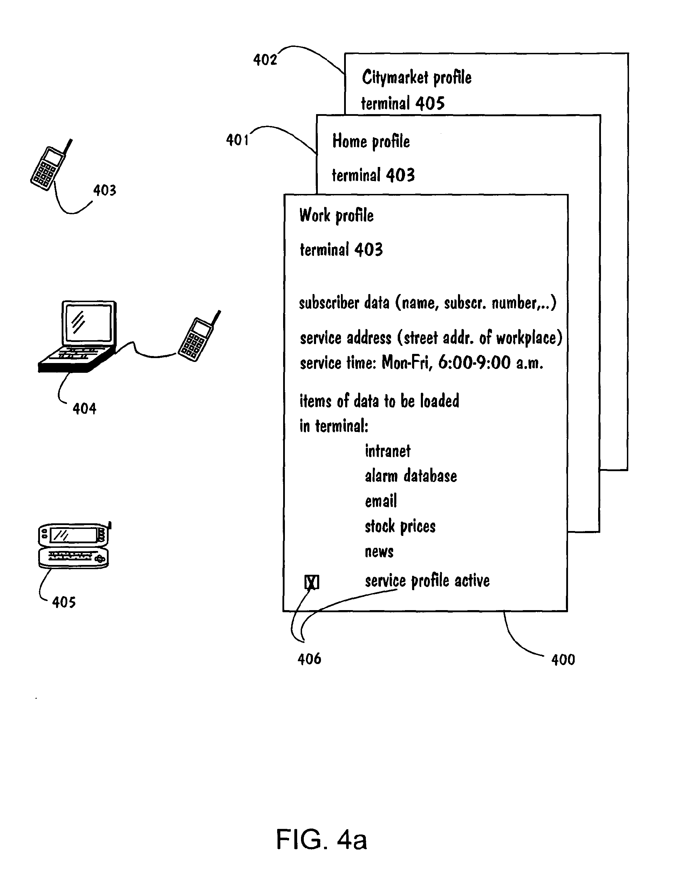

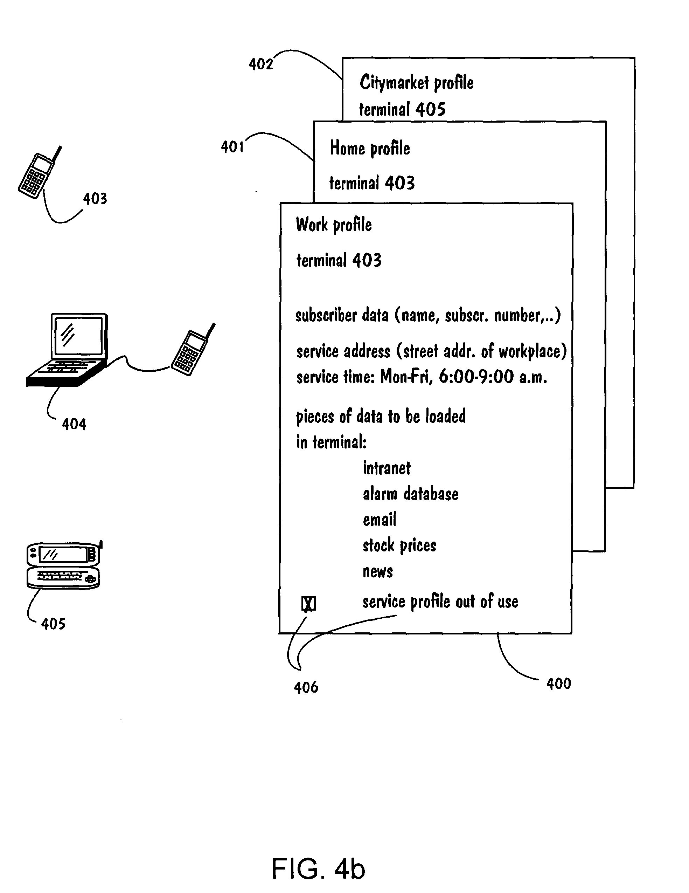

Figure 4 illustrates the service profiles related to a user.

The user inputs in his/her service profile at least the following items of information into the form placed on the home page:
a name of the profile (e.g. home, work, hobby, student),
information about a terminal of the user, said information needed by the provider of the data transmission service,
the address in which the data transmission service is needed (the street address),
the time period/periods when the service is wanted (dates and times),
definition for the wanted data transmission service (the items of information loaded into the terminal, for example, a link list).

The service profiles can be at nay time added, removed, and edited either directly by the user, using the form located on the home page, or alternatively, the provider of the data transmission service changes the items of information when receiving an announcement from the user, for example, as a call, fax, email, or as a short message (SMS, Short Message Service).

In the figure the service profile 400 is termed as "a work profile".

The work profiles include the following definitions:
terminal: 403
service address: address of workplace
service time: Monday Friday, mornings 6:00-9:00
link list: intranet pages of a company, alarm database, email, stock prices, news.

The service profile 401 is termed "a home profile"

The definitions included in the home profile are:
terminal: 403
service address: home address
service time: Monday-Friday evenings 20.00-21.00, Saturday-Sunday, afternoons 15.00-16.00,
link list: news, sports results, traffic announcements, email, bank services.

The service profile 402 is termed "a Citymarket profile". This service profile can be used when shopping in the markets/stores near a home and is usable by all the members of a family.

The definitions of the Citymarket profile are:
terminal: 405
service address: address of Citymarket
service time: mon-fri, afternoons 15-19
link list: family's home page containing the family's shopping list and a link to the home address of Citymarket in which offers are placed.

The family members use either the same user identifier and password or each of them has his/her own user identifier and password. If required, it is possible to create for each family member his/her own service profile related to Citymarket.

The data transmission service is flexible because the user can whenever edit, add, and remove service profiles. These instructions do not require that the data transmission connection has automatically been opened from the network. In other words, the user can, if needed, activate the connection (context) to the service server for editing the service profiles. The user can, for example, temporarily turn off (deactivate) the service. One way to do this could be a service profile containing a check box 406 in which a check can be placed to activate a service (Figure 4a) or to deactivate the service (Figure 4b).

The data transmission service enables defining disposable service profiles. The disposable service profiles are especially usable in situations when a user must travel due to his/her job to a different neighbourhood, or when the user has a social occasion, such as a theater, an exhibition, a mall, or a sport event. The service profile can be defined, for example, one the way to a certain social occasion, at which time the user obtains the wanted information when arriving at the place.

The location process of a certain terminal is activated on the basis of the definitions of a service profile, i.e. when the criteria of the point of a starting time are met.

A number of location methods are usable. The location methods can be divided into three classes according to their implementation: the network location method, the terminal location method, and the hydride location. The last mentioned method is a combination of the former two methods. Any appropriate location method can be used at the location related to the invention.

Continuous localization of the terminal may involve problems. First of all, it causes a unnecessary signalling load to the network, if a user does not need a service at certain time of day or on certain weekdays, or if the user just needs the service very infrequently. Secondly, due to the wish to maintain the privacy, the user does not necessarily want his/her terminal to be continuously located. In order to avoid these problems, the user can define the points in time when he/she wants to have the data transmission service.

The operator can also set prices differently depending on different points in time when the location search is performed. The location frequency may be reduced if a user moves away from the address defined in the service profile. The location search is stopped when the user is located on the area of the service profile and the action to transfer the wanted information has been started. If the user already has an opened connection for the data transmission service, the location search of user is stopped. When the data transmission service connection is closed, the location is started according to definitions of the service profile.

The need for the location frequency can be optimized depending on the accuracy of the location system. If the location system is able to locate a subscriber with the accuracy of 100 meters, the location search can be scheduled within a time period defined in the service profile, for example, as follows:
When the distance between the terminal and the service area is
   a) 100 m, the location search is stopped, the data transmission connection is opened, and the information defined in the service profile is loaded,
   b) 200 m, the terminal is located each 30^{th} second,
   c) 400 m, the terminal is located each 60^{th} second,
   d) 10 km, the terminal is located each 10^{th} minute,
   e) 100 km, the terminal is located each hour,
   f) 200 km, the terminal is located each third hour, etc.
When the user closes in the service area the data transmission connection that has already been opened once, a new data transmission connection is not automatically opened in the same service area (default value). Due to a distinct request of the user the default value can be changed.

In a certain embodiment of the invention the data transmission service can be implemented so that a certain group sharing one terminal uses the same data transmission service. The group could be, for example, a work group, a student group, a family, etc. Then each group member has one shared user identifier and password or, alternatively, each user has his/her own user identifier and password. The data transmission service can also be defined so that the definitions of the service profile are not the same way for all group members. In other words a project leader could have profiles or part of profiles which are defined so that they do not concern the rest of the group members, for example.

The invention can also be implemented by defining one service profile for a group so that the service profile is valid for at least some mobile terminals (200, 206, 207) of the group members. In order to cut costs the location could be performed so that only the terminal of the group leader is located, and not until the terminal arrives at a defined service area are the terminals of the rest of the group members located. A data transmission connection to the terminal of the group leader is opened from the network and then data is sent. The sending of the data to the rest of the group members can be implemented in two different ways:
1) a data transmission connection is opened for each member's terminal immediately when its location is determined, and data is sent independently to each member's terminal whether the corresponding terminal locates on a predetermined service area or not, or
2) a data transmission connection is not opened for each group member until the terminal is detected as located in the service area, and then data is sent to the member.

In the first alternative for implementation, the current location of a certain terminal can be considered to be the service area of the data transmission service for the corresponding terminal. In other words, the service area may vary among group members, but the service data to be transmitted to the terminal is at least partly the same for all group members.

It is possible to implement the data transmission service in many ways differing in details.

For example, the facilities of the service server can be allocated to more than one server. The above-mentioned term "service area" should be considered in broad sense. For example, the data transmission process can be started even if a subscriber has not been precisely located on the coverage area of the cell that has been defined as a service area, but the subscriber has been located in a neighbour cell, very near the service area cell. The service server may also open a connection to some terminal other than a terminal of the Internet. The implementation may also include other actions needed for the data transmission service than the actions presented in the example. The actions are determined by each application. A service provider defines its own definitions in a subscriber's service profile, wherein the definitions are invisible for the subscriber.

In one possible embodiment of the invention, the terminal to be located and the terminal to which the service data is sent may also be different subscriber terminals.

Though the invention is described with reference to the examples of the accompanying drawings, it is obvious that invention is not limited by them, but a person skilled in the art can modify the presented solutions without departing from the idea of the invention.

## Claims

1. A method of transmitting a data transmission service to a mobile terminal (200) depending on its location in a data communication network,
**characterized by** the steps of:
locating at predetermined time intervals a terminal of a subscriber which has ordered the data transmission service,
when detecting the terminal (200, 206, 207) as being located in a service area of the data transmission service (218), opening a data transmission connection between the terminal (200, 206, 207) of the network and a terminal serving service data,
sending the service data to the terminal (200, 206, 207) by using the data transmission connection, and
maintaining the connection until a predetermined criterion is met.

2. The method as in claim 1, **characterized by** the further step of: receiving the information related to the terminal (200, 206, 207), wherein said information is input by the subscriber and at least includes items of information related to the terminal, a service area defined by the subscriber, service time of the service, and service data.

3. The method as in claim 2, **characterized by** the further step of: forming a service profile by using said information, wherein the data transmission service is implemented according to the service profile.

4. The method as in claim 3, **characterized by** the updating, activating, and deactivating of the service profile on the basis of an announcement of the user.

5. The method as in claim 1, **characterized in that** the same terminal is related to one or more service areas of the data transmission service.

6. The method as in claim 5, **characterized in that** each service area (218) of the data transmission service is related to its own service data.

7. The method as in claim 1, **characterized by** the further steps of:
in that in addition to said terminal,
locating simultaneously at predetermined time intervals at least one other terminal belonging to the same group,
detecting another terminal (206, 207) located in a service area (218) of the data transmission service, opening a data transmission connection between the terminal of the network and the terminal serving the service data (200, 206, 207),
sending the service data to the other terminal (206, 207) by using the data transmission connection, and
maintaining the connection until the predetermined criteria is fulfilled.

8. The method as in claim 1, **characterized by** the further steps of:
in that in addition to said terminal,
locating simultaneously at predetermined time intervals at least one other terminal (206, 207) belonging to the same group when the terminal (200) of the subscriber which has ordered the data transmission service has been detected to locate on the service area (218) of the data transmission service,
opening a data transmission connection between the terminal (200, 206, 207) of the network and the terminal serving the service data,
sending the service data to the other terminal (206, 207) by using the data transmission connection,
maintaining the connection until the predetermined criterion is met.

9. The method as in claim 7 or 8, **characterized in that** content of the service data is at least partly the same to each terminal (200, 206, 207).

10. The method as in claim 8, **characterized in that** the opening of the data transmission connection to the terminal occurs regardless the location of the other terminal.

11. The method as in claim 7, **characterized by** the opening of a data transmission connection to the other terminal (206, 207) when it is located in the service area of the data transmission service ordered by the subscriber.

12. The method as in claim 1, **characterized in that** the length of the time interval is directly proportional to the geographical distance between the terminal (200, 206, 207) and the service area (218) of the data transmission service.

13. The method as in some of the previous claims, **characterized in that** the data transmission connection is opened to pass a server (211) which is adapted to the data transmission connection.

14. The method as in claim 1, 7, or 8, **characterized in that** location search for the terminal (200, 206, 207) is defined by the subscriber.

15. The method as in claim 1, 7, or 8, **characterized in that** said location search is stopped when the terminal (200, 206, 207) is located on the service area (218) of the data transmission service.

16. The method as in claim 1, 7, or 8, **characterized in that** the location search is stopped when a predetermined service time of the data transmission service has expired.

17. The method as in claim 2, **characterized in that** the service area (212) defined by the subscriber is a part of the service area (218) of the data transmission service.

18. The method as in claim 1, **characterized in that** the data transmission connection is closed when the terminal leaves the service area (218) of the data transmission service, when the predetermined criteria is specifies this when the user leaving the service area.

19. The method as in claim 1, **characterized in that** the data transmission connection is closed when the user of the terminal closes the data transmission connection, when a predetermined criteria is that the data transmission connection is to be closed by the user.

20. A system for locating a terminal, wherein the data transmission service is transmitted to a mobile terminal (200) depending on its location in the data communication network,
**characterized in that** the system comprises:
detecting means which detect in response to a location search occurring at predetermined time periods, the terminal (200, 206, 207) is to located in the service area (218) of the data transmission service, when a data transmission connection is opened between the terminal (200, 206, 207) and the terminal serving service data,
data transmission means which transmits the service data to the terminal (200, 206, 207) by using the data transmission connection.

21. The system as in claim 20, **characterized in that** the detecting means are also adapted, in response to the location search occurring at the predetermined time intervals, to detect at least one other subscriber terminal (200, 206, 207) belonging to the same group and located in the (218) service area of the data transmission service, after which a data transmission connection to the terminal (200, 206, 207) is opened from the network and whereat the data transmission means transmits the service data from the terminal (200, 206, 207) to the other terminal by using the data transmission connection.

22. A server for transmitting data transmission service to a mobile terminal (200, 206, 207) depending on its location in the data transmission network,
**characterized in that** the server is adapted to:
manage and control a process of data transmission service,
send at predetermined time intervals a request to perform a location search of the terminal (200, 206, 207) belonging to the data transmission service,
analyze received location data,
and as response to the analyse result, in which the terminal locates on the service area of the data transmission service,
activate the opening of a data transmission connection from the network to the terminal and open the data transmission connection to the terminal in which the service is data located, and
control the transmitting of the service data to the terminal by using the data transmission connection.

23. The server as in claim 22 **characterized in that** the server is also adapted to store and maintain service profiles related to the terminal, wherein the content of the data transmission service is defined in said service profiles, and
take charge of the implementation of the data transmission service.
